# EUROPÄISCHE PATENTSCHRIFT

(11) **EP 2 945 260 B1**
(45) Veröffentlichungstag und Bekanntmachung des Hinweises auf die Patenterteilung: **08.08.2018**
(21) Anmeldenummer: 15166543.7
(22) Anmeldetag: 06.05.2015
(51) Int. Cl.: H02K 7/14, H02K 1/24, H02K 1/30, H02K 15/12

(54) **ELEKTRISCHER MOTOR EINER HAND-WERKZEUGMASCHINE**
ELECTRICAL MOTOR OF A HAND-HOLD TOOL
MOTEUR ÉLECTRIQUE D'UNE MACHINE-OUTIL MANUELLE

(30) Priorität: 16.05.2014 DE 102014007247
(43) Veröffentlichungstag der Anmeldung: 18.11.2015
(73) Patentinhaber: Festool GmbH, 73240 Wendlingen am Neckar (DE)
(72) Erfinder: FLEISCHMANN, Bernd, 73235 Weilheim (DE); HIGELIN, Michael, 73054 Eislingen/Fils (DE)
(74) Vertreter: Patentanwälte Bregenzer und Reule Partnerschaftsgesellschaft mbB

(56) Entgegenhaltungen:
- EP-A1- 0 982 835
- EP-A1- 1 841 041
- EP-A2- 2 597 753
- DE-A1- 2 543 549
- DE-A1- 10 342 694

## Beschreibung

Die Erfindung betrifft eine Hand-Werkzeugmaschine oder einen Staubsauger mit einem elektrischen Motor gemäß dem Oberbegriff des Anspruchs 1.

Ein derartiger Motor ist beispielsweise in DE 25 43 549 A1 erläutert.

Ein magnetischer Flussleitkörper, beispielsweise aus Weicheisen, ist mit der Rotorwelle beispielsweise direkt formschlüssig verbunden, d.h. die Rotorwelle ist in das Blechpaket eingepresst. Bei Motoren für Hand-Werkzeugmaschinen, Staubsauger oder dergleichen andere, relativ kleine Motoren aufweisenden Geräten ist es üblich, dass die Rotorwelle anhand eines Kunststoffmaterials mit dem magnetischen Flussleitkörper verbunden ist. Das Kunststoffmaterial wird mit den zu verbindenden Komponenten, nämlich Rotorwelle und Flussleitkörper, verpresst, so dass ein fester Halt der Rotorwelle in oder an dem magnetischen Flussleitkörper gegeben ist. Die Verarbeitung des Kunststoffes ist allerdings relativ aufwändig.

Es ist daher die Aufgabe der vorliegenden Erfindung, einen Motor sowie ein Herstellungsverfahren für einen elektrischen Motor bereitzustellen, der bzw. das gegenüber dem Stand der Technik verbessert ist.

Zur Lösung der Aufgabe ist eine Hand-Werkzeugmaschine oder ein Staubsauger gemäß der technischen Lehre des Anspruchs 1 vorgesehen. Zur Lösung der Aufgabe ist ferner ein Herstellungsverfahren gemäß einem weiteren unabhängigen Anspruch vorgesehen.

Gegenüber dem üblicherweise bei elektrischen Motoren verwendeten duroplastischen Kunststoff, der verpresst werden muss, was die Herstellung deutlich erschwert, hat der thermoplastische Kunststoff den Vorteil, dass er einfach zu verarbeiten ist. Der Rotor muss nur vergossen werden, d.h. der magnetische Flussleitkörper wird mit der Rotorwelle anhand des thermoplastischen Kunststoffes vergossen, so dass sich ein stabiler, Flussleitkörper und Rotorwelle fest verbindender Verbindungskörper ausbildet.

Der Stator kann einteilig oder mehrteilig sein. Es ist beispielsweise möglich, dass Stator aus zwei oder mehr Schalenteilen, beispielsweise Halbschalen, besteht, die zusammengefügt werden. An den Schalenkörpern können stirnseitige Wandabschnitte vorgesehen sein, die Lageraufnahmen für die Lagerung des Rotors aufweisen.

Es ist auch möglich, dass der Stator einen Hülsenkörper aufweist, an dem mindestens eine Stirnwand lösbar vorgesehen ist, d.h. dass sie nach der Montage des Rotors im Innenraum des Stators an den Stator angefügt wird. Die andere Stirnwand kann integral am Stator vorgesehen sein, also einstückig, oder auch eine ebenfalls lösbar am Hülsenkörper befestigbare Stirnwand sein.

Es ist auch ein mehrteiliger Stator möglich, d.h. dass beispielsweise in eine Tragstruktur ein Erregerwicklungspaket eingelegt wird und zudem auch der erfindungsgemäß ausgestaltete Rotor und dann die Tragstruktur geschlossen wird. Beispielsweise besteht die Tragstruktur aus Kunststoff-Schalenbauteilen, insbesondere aus Halbschalen. Die Tragstruktur lagert den Rotor.

Bei dem der thermoplastischen Kunststoff handelt es sich vorzugsweise um einen Polyamid-Kunststoff.

Vorteilhaft ist der thermoplastische Kunststoff faserverstärkt, z.B. mit Glasfasern und/oder Kohlefasern und/oder Fasern aus einem anderen Kunststoff als dem thermoplastischen Kunststoff. Ferner kann der thermoplastische Kunststoff auch mit Körpern oder Kugeln aus einem anderen Material, insbesondere Glaskugeln, verstärkt sein. Das andere Material, beispielsweise Glas, hat eine Schmelztemperatur oberhalb des thermoplastischen Kunststoffes. Anstelle von Kugeln können auch Körper mit anderen Geometrien verwendet werden, beispielsweise würfelförmige Körper. Weiterhin ist es denkbar, sowohl eine Faserverstärkung als auch eine Verstärkung mit anderen Körpern, insbesondere Kugeln, parallel vorzusehen, d.h. dass sowohl Fasermaterial als auch Kugeln in dem thermoplastischen Material enthalten sind. Der Vorteil der Glaskugeln ist insbesondere, dass das thermoplastische Material dadurch eine höhere Wärmefestigkeit und/oder mechanische Stabilität hat und/oder das Fließverhalten des Kunststoffmaterials verbessert ist.

Zweckmäßigerweise ist der thermoplastische Kunststoff ein faserverstärkter Polyamid-Kunststoff, z.B. PA66 GF25 (GF25 = 25% Glasfaseranteil) oder einem anderen Faseranteil.

Ein thermoplastischer Kunststoff hat allerdings den Nachteil, dass er beim Aushärten schwindet, d.h. dass sein Volumen abnimmt. Es besteht daher prinzipiell die Gefahr, dass die Verbindung zu Rotorwelle und magnetischem Flussleitkörper nicht stabil genug ist, d.h. dass Bereiche entstehen, wo der thermoplastische Kunststoff nicht in ausreichendem Maße an den Komponenten anhaftet, die er verbindet, nämlich dem elektromagnetischen Flussleitkörper und der Rotorwelle. Diesem Problem trägt die Maßnahme Rechnung, gemäß der ein Verbindungsabschnitt oder mehrere Verbindungsabschnitte des Verbindungskörpers, der zur Verbindung von Flussleitkörper und Rotorwelle einen Verbindungsabschnitt aufweist, zusätzlich noch in einem auf die Drehachse bezogen radialen Hintergriff mit dem Flussleitkörper oder der Rotorwelle oder beiden ist. Der Verbindungskörper hintergreift oder übergreift also radial bezüglich der Drehachse den Flussleitkörper oder die Rotorwelle. Unter einem Hintergriff kann also auch ein "Übergreifen" verstanden werden.

Zweckmäßigerweise mantelt der Verbindungskörper den Flussleitkörper an seinem radialen Außenumfang zumindest teilweise ein und bildet für diesen einen Außenmantel oder eine Außenhülle oder hat Mantelabschnitte. Die Mantelabschnitte oder der Außenmantel sind mit einem die Rotorwelle aufnehmenden Kernbereich des Verbindungskörpers durch Verbindungsarme des Verbindungskörpers oder Verbindungswände des Verbindungskörpers verbunden. Die Mantelabschnitte bezogen auf die Drehachse einen Umfangsabstand und/oder einem Längsabstand haben. So ist es beispielsweise denkbar, dass jeweils stirnseitig ein Mantelabschnitt des Verbindungskörpers vorgesehen ist, der mit einem Kernbereich des Verbindungskörpers verbunden ist.

Da der thermoplastische Kunststoff zu einem Schwinden neigt, schrumpft er beispielsweise auf die Rotorwelle auf. An der Rotorwelle sind daher die Hintergreifstrukturen zwischen Rotorwelle und Verbindungskörper bei manchen Ausführungsformen nicht vorgesehen.

Vorteilhaft ist aber auch in diesem Fall, wenn zwischen der Rotorwelle und dem Verbindungskörper ein Formschluss vorhanden ist, z.B. um die Rotorwelle längs zur Drehachse am Verbindungskörper festzulegen. Daher sind z.B. an der Rotorwelle Nuten, insbesondere schraubenförmig verlaufende Nuten, vorgesehen sind, in die der Verbindungskörper eingreift.

Es sei an dieser Stelle ausdrücklich bemerkt, dass der Rotor mehrere Flussleitkörper aufweisen kann und dass selbstverständlich auch mehrere Verbindungskörper vorgesehen sein können, beispielsweise in Umfangsrichtung bezüglich der Drehachse mehrere nebeneinander angeordnete Flussleitkörper und/oder Verbindungskörper und/oder in Längsrichtung der Drehachse mehrere Flussleitkörper und/oder Verbindungskörper. Mindestens einer der Verbindungskörper weist dann den thermoplastischen Kunststoff und den Hintergriff auf.

An dem Flussleitkörper oder der Rotorwelle sind beispielsweise Hintergreifvorsprünge und/oder Hintergreifaufnahmen vorgesehen, in die der Hintergreifabschnitt des Verbindungskörpers eingreift. An dem Flussleitkörper oder der Rotorwelle oder beiden sind beispielsweise Hinterschnitte vorgesehen. Aber auch Kanäle, in die das noch weiche, fließfähige thermoplastische Kunststoffmaterial einfließen kann, eignen sich als Hintergreifbereiche für den Verbindungskörper. Der Hintergreifabschnitt kann beispielsweise einen Hakenvorsprung oder eine Hakenaufnahme und/oder einen Kanal, der in der Rotorwelle oder dem Flussleitkörper (oder die Flussleitkörper) verläuft, umfassen. Auch eine tannenbaumartige oder zapfenartige Hintergreifstruktur am Flussleitkörper und/oder der Rotorwelle für den Verbindungskörper sind vorteilhaft.

Wenn also der thermoplastische Kunststoff bis zu einem gewissen Maße schwindet, während er aushärtet, stellen der oder die Hintergreifabschnitte einen Halt des Verbindungskörpers am Flussleitkörper oder der Rotorwelle oder beiden sicher.

Ein bevorzugtes Anwendungsgebiet der Erfindung sind elektronisch kommutierte Motoren oder sogenannte SR-Motoren (SR = Switched Reluctance).

Die Erfindung sieht vor, dass an dem Flussleitkörper und/oder der Rotorwelle mindestens ein Kanal für den thermoplastischen Kunststoff angeordnet ist. Der Kanal kann in einer Ausführungsform der Erfindung im Wesentlichen radial oder ausschließlich radial verlaufen, so dass er beispielsweise eine Verbindung zwischen einerseits dem in der Wellendurchtrittsöffnung befindlichen Kunststoffmaterial des Verbindungskörpers, sozusagen einem Kern, und andererseits einem äußeren, den Flussleitkörper ummantelnden Bereich herstellt. Eine andere Variante sieht beispielsweise vor, dass der Kanal radial oder schräg zu einer radialen Richtung, also im Wesentlichen radial, verläuft, so dass das Kunststoffmaterial beispielsweise vom Kernbereich, d.h. der Rotorwelle her nach radial außen in den Flussleitkörper hinein gelangt und dort eine gewisse Verzahnung herstellt.

Erfindungsgemäß ist vorgesehen, dass der Kanal zur Bildung einer Hintergreifaufnahme oder eines Hintergreifvorsprungs mindestens einen zur Wellendurchtrittsöffnung radial beabstandeten Kanalabschnitt aufweist, der eine Richtungskomponente in Richtung der Drehachse aufweist. Dieser Kanalabschnitt kann beispielsweise parallel zur Drehachse verlaufen, aber auch schräg dazu. In beiden Fällen wird eine radial stabilisierende Verbindung zwischen Rotorwelle und Flussleitkörper durch den Verbindungskörper bzw. den Verbindungsabschnitt, der in dem Kanalabschnitt verläuft, gebildet. Der Verbindungskörper kann beispielsweise eine Art Haltearm ausbilden. Selbstverständlich können mehrere derartige Kanäle und/oder Haltearme vorgesehen sein. Der Kanal kann beispielsweise schräg von der Wellendurchtrittsöffnung her in den Flussleitkörper oder die Rotorwelle hinein verlaufen. Es ist aber auch eine stufige Konfiguration möglich, das heißt dass der Kanal beispielsweise zunächst nach radial außen von der Rotorwelle her in den Flussleitkörper hinein verläuft und dann abgewinkelt ist, beispielsweise schräg verlaufend abgewinkelt oder mit einem rechten Winkel, also in Richtung der Drehachse. Daran kann sich wieder ein radialer Kanalabschnitt anschließen.

Es wurde bereits erwähnt, dass mindestens ein Kanal für den thermoplastischen Kunststoff sich zwischen der Wellendurchtrittsöffnung und seinem Außenumfang erstrecken kann. Es ist dabei möglich, dass dieser Kanal sozusagen in einer Mantelfläche des Verbindungskörpers ausmündet, die den Flussleitkörper ummantelt. Der Kanal kann Windungen und/oder Stufen aufweisen. Es ist auch möglich, dass der Kanal in wesentlichen linear verläuft, z.B. in radial oder schräg zur radialen Richtung.

Es ist möglich, dass außen am Flussleitkörper keine Mantelfläche des Verbindungskörpers vorgesehen ist, d.h. dass der vorgenannte Kanal sozusagen mit seinem Längsende außen am Flussleitkörper ausmündet oder endet. Weiterhin ist es möglich, das außen am Flussleitkörper dann ein abgewinkelter Abschnitt, insbesondere ein L-förmiger oder T-förmiger Abschnitt (der auch in Längsrichtung seitlich offen sein kann), des Kanals vorgesehen ist, so dass sozusagen ein Haken oder Anker des Verbindungskörpers ausgebildet ist, mit dem der Verbindungskörper mit dem Flussleitkörper verhakt oder verankert ist.

Der Verbindungskörper hat zweckmäßigerweise einen den Flussleitkörper an seinem radialen Außenumfang umhüllenden Mantel oder Mantelabschnitt.

Es ist vorteilhaft, wenn der den Flussleitkörper umhüllende Mantel oder Mantelabschnitt an einer oder mehreren Stellen mit einem die Rotorwelle umschließenden Kernbereich des Verbindungskörpers verbunden ist. Beispielsweise können Verbindungsarme des Verbindungskörpers den Flussleitkörper durchsetzen. Dazu sind beispielsweise die vorgenannten Kanäle am Flussleitkörper vorgesehen.

Vorteilhaft ist es auch möglich, dass anhand eines an einer Stirnseite des Flussleitkörpers angeordneten Wandabschnitts oder Armabschnitts des Verbindungskörpers eine Verbindung zwischen dem Kernbereich und dem Mantelabschnitt am Außenumfang des Flussleitkörpers hergestellt ist. Es versteht sich, dass alternativ oder ergänzend anstelle des Wandabschnitts auch ein Armabschnitt vorgesehen sein kann. Beispielsweise ist es denkbar, dass an einer Stirnseite des Flussleitkörpers sternförmig verlaufende Verbindungsarme des Verbindungskörpers eine Verbindung zwischen einerseits dem Bereich um die Rotorwelle und andererseits dem Mantelabschnitt herstellen.

Es ist möglich, dass der Mantel segmentiert ist, d.h. dass beispielsweise mehrere Mantelabschnitte vorgesehen sind. Die Mantelabschnitte können bezüglich der Drehachse in Umfangsrichtung und/oder längs der Drehachse Abstände zueinander haben. Die Mantelabschnitte können am Außenumfang (bezüglich der Drehachse) miteinander verbunden sein, beispielsweise durch Verbindungsarme oder dergleichen, oder aber auch in der Art von Inseln jeweils voneinander isoliert sein.

Es ist aber auch ein komplett den Flussleitkörper ummantelnder Mantel des Verbindungskörpers denkbar.

An dieser Stelle sei noch erwähnt, dass der Mantel des Verbindungskörpers nicht unbedingt mit dem Kernbereich des Verbindungskörpers verbunden sein muss, der die Rotorwelle umgibt. Es ist vielmehr auch möglich, dass einerseits der Flussleitkörper anhand des Verbindungskörpers mit der Rotorwelle (mit dem erfindungsgemäßen Hintergriff oder den Hintergriffen) verbunden ist, andererseits ein von diesem Teil des Verbindungskörpers separater Teil als Außenmantel um den Flussleitkörper ausgestaltet ist.

Bevorzugt ist es, wenn Abschnitte des Flussleitkörpers nach radial außen vor den Verbindungskörper, jedenfalls die vorgenannten umhüllenden Mantelabschnitte des Verbindungskörpers, vorstehen. So kann eine Ausführungsform der Erfindung beispielsweise vorsehen, dass der Außenmantel oder der Mantelabschnitt des Verbindungskörpers Durchbrüche aufweist, durch die Flussleitkörper-Abschnitte nach radial außen vorstehen. Die Abschnitte des Flussleitkörpers verlaufen beispielsweise in Längsrichtung zur Drehachse parallel. Die Abschnitte des Flussleitkörpers stehen beispielsweise in der Art von Höckern oder Domen nach radial außen vor die Mantelfläche oder den Außenmantel des Flussleitkörpers vor.

Eine vorteilhafte Ausführungsform der Erfindung sieht vor, dass der Rotor einen im Wesentlichen homogenen Außenumfang aufweist, auch wenn Vorsprünge des Flussleitkörpers vor den Außenmantel des Verbindungskörpers vorstehen. So sieht beispielsweise eine Variante dabei vor, dass der Außenmantel Vertiefungen aufweist, in welchen die vor den Verbindungskörper radial vorstehenden Abschnitte des Flussleitkörpers angeordnet sind.

Eine andere Variante der Erfindung sieht vor, das der Verbindungskörper sozusagen spoilerartige Zwischenvorsprünge zwischen den radial vor den Verbindungskörper vorstehenden Abschnitten des Flussleitkörpers aufweist, um eine möglichst homogene Außenoberfläche oder Umfangsfläche des Rotors zu bilden. Der mindestens eine Zwischenvorsprung steht vorteilhaft etwa so weit vor den Außenumfang des Verbindungskörpers wie die neben dem Zwischenvorsprung angeordneten Abschnitte des Flussleitkörpers.

Vorteilhaft ist vorgesehen, wenn der Zwischenvorsprung des Flussleitkörpers an seinem Außenumfang eine Krümmung entsprechend der Drehachse aufweist. Selbstverständlich ist es auch vorteilhaft, wenn die vorstehenden Abschnitte des Flussleitkörpers ebenfalls eine Krümmung um die Drehachse aufweisen. Mithin entsteht dadurch ein im Wesentlichen im Querschnitt runder Rotor.

Eine bevorzugte Ausführungsform der Erfindung sieht vor, dass an dem Flussleitkörper und/oder der Rotorwelle zur Bildung einer Hintergreifaufnahme oder mehrerer Hintergreifaufnahmen eine in der Art eines Labyrinths ausgestaltete und mit dem thermoplastischen Kunststoff ausgefüllte Kanalstruktur vorgesehen ist. Somit verfängt sich sozusagen der thermoplastische Kunststoff in der Labyrinthstruktur und stellt einen festen Halt zwischen einerseits dem Verbindungskörper und andererseits der Rotorwelle und/oder dem Flussleitkörper her.

Eine Ausführungsform der Erfindung kann vorsehen, dass mindestens eine Hintergreifaufnahme oder mindestens ein Hintergreifvorsprung für den mindestens einen Hintergreifabschnitt sich im Wesentlichen über die gesamte Längslänge des Flussleitkörpers oder der Rotorwelle bezüglich der Drehachse erstreckt. Beispielsweise kann eine Hintergreifaufnahme in der Art einer Längsnut oder ein Hintergreifvorsprung in der Art einer Längsrippe ausgestaltet sein. Wenn die Längsrippe im Querschnitt beispielsweise L-förmig oder etwa U-förmig ist, bildet sie zugleich einen Hintergreifvorsprung und eine Hintergreifaufnahme. Zweckmäßigerweise ist z.B. ein Hinterschnitt vorgesehen, insbesondere am Innumfang der Wellendurchtrittsöffnung und/oder am Außenumfang der Rotorwelle. Der Hinterschnitt hat vorteilhaft eine Längsgestalt und erstreckt beispielsweise etwa parallel zur Drehachse.

Mithin soll an dieser Stelle betont sein, dass der Hintergriff sowohl durch eine Aufnahme als auch durch einen Vorsprung oder beides an der Rotorwelle oder dem Flussleitkörper realisiert sein kann.

Der Hintergreifabschnitt des Verbindungskörpers hat zweckmäßigerweise die Struktur eines Hakens oder ist hakenförmig. Vorzugsweise kann diese Hakenstruktur oder Haken an einem die Rotorwelle umschließenden Kernbereich des Verbindungskörpers vorgesehen sein und sich nach radial außen erstrecken und in eine Hakenaufnahme am Innenumfang der Wellendurchtrittsöffnung eingreifen. Es ist aber auch möglich, dass sich von diesem Kernbereich des Verbindungskörpers mindestens ein Haken nach radial innen erstreckt und in eine Hakenaufnahme an der Rotorwelle eingreift.

Die Rotorwelle oder der Flussleitkörper oder beide weisen zweckmäßigerweise eine Nutstruktur oder Rillenstruktur auf, wobei beispielsweise eine oder mehrere Rillen oder Nuten vorgesehen sind, in die der Verbindungskörper eingreift. Alternativ oder ergänzend ist auch eine Rippenstruktur oder Vorsprung-Struktur mit mindestens einer Rippe vorteilhaft, die in den Verbindungskörper eingreift.

Eine Verzahnung zwischen einerseits dem Verbindungskörper und andererseits der Rotorwelle oder dem Flussleitkörper oder beiden ist vorteilhaft.

An der mindestens einen Nut oder Rippe ist vorteilhaft ein Hintergreifvorsprung oder eine Hintergreifaufnahme für den mindestens einen Hintergreifabschnitt des Verbindungskörpers vorgesehen.

Eine vorteilhafte Ausführungsform der Erfindung sieht vor, dass der Flussleitkörper durch ein Blechpaket mit mehreren Blechen gebildet ist. Die Bleche weisen beispielsweise Hintergreifaufnahmen, Kanalabschnitte oder dergleichen auf. Es ist dabei möglich, dass mehrere mit der gleichen Winkelorientierung bezüglich der Drehachse nebeneinander angeordnete Bleche gemeinsam eine Hintergreifaufnahme, einen Kanalabschnitt oder ein Hintergreifvorsprung ausbilden.

Es ist aber auch möglich, dass unterschiedliche Bleche verwendet werden, beispielsweise Bleche mit Hintergreif-Strukturen (Hintergreifaufnahmen und/oder Hintergreifvorsprünge und/oder Kanälen) und Bleche ohne derartige Hintergreif-Strukturen. Die Bleche mit und ohne Hintergreif-Strukturen sind beispielsweise bezüglich der Drehachse abwechselnd nebeneinander angeordnet, wobei es zweckmäßig ist, dass jeweils mehrere gleichartige Bleche bezüglich der Drehachse unmittelbar nebeneinander angeordnet sind.

Eine besonders bevorzugte und Ausführungsbeispiel noch deutlich werdende Ausführungsform der Erfindung sieht vor, dass die Bleche zumindest teilweise als Gleichteile ausgestaltet sind, wobei die Bleche mindestens eine Hintergreifaufnahme und/oder mindestens einen Hintergreifvorsprung und/oder mindestens einen Kanalabschnitt aufweisen. Bezüglich der Drehachse sind die Bleche nebeneinander angeordnet und haben einzeln oder gruppenweise einen Drehwinkelversatz bezüglich der Drehachse.

Die durch die jeweiligen Bleche begrenzten Hintergreifaufnahmen (wie gesagt, können mehrere Bleche gemeinsam eine Hintergreifaufnahme begrenzen) oder auch derartige Hintergreifvorsprünge oder Kanalabschnitte weisen zweckmäßigerweise voneinander verschiedene Drehwinkelpositionen bezüglich der Drehachse auf. So ist es beispielsweise möglich, dass die Hintergreif-Strukturen, die von einer jeweiligen Gruppe von Blechen oder einem einzelnen Blech definiert werden, in einem anderen Drehwinkel bezüglich der Drehachse orientiert sind, als die Hintergreif-Strukturen eines anderen Blechs oder einer anderen Gruppe von Blechen. Es ist auch möglich, dass nebeneinander angeordnete Gleichteilbleche oder Gruppen von Gleichteil-Blechen Hintergreifaufnahmen, Hintergreifvorsprünge oder Kanalabschnitte aufweisen, die mit der benachbarten Hintergreif-Struktur (Hintergreifaufnahme, Hintergreifvorsprung oder Kanalabschnitt) fluidtechnisch kommunizieren oder miteinander kommunizierende Öffnungen haben. Die kommunizierende Öffnungen oder die durch diese miteinander verbundenen Kanalabschnitte verlaufen zweckmäßigerweise in Richtung der Drehachse oder etwa in Richtung der Drehachse.

Somit kann also das thermoplastische Kunststoffmaterial sozusagen von der Hintergreif-Struktur des einen Blechs zur Hintergreif-Struktur des andern Blechs fließen. Die Schnittstellen bzw. Kommunikationsöffnungen, mit denen die Hintergreif-Strukturen benachbarter Bleche oder Blechpaket-Gruppen miteinander kommunizieren, verlaufen beispielsweise etwa längs der Drehachse oder jedenfalls schräg zur Drehachse.

Bevorzugt ist es, wenn der mindestens eine Verbindungsabschnitt einen Zwischenraum überbrückt, der sich durch ein Schwinden des thermoplastischen Kunststoffes bei seinem Aushärten zwischen dem Flussleitkörper und der Rotorwelle ausbildet. Der Zwischenraum ist beispielsweise axial längs der Drehachse und/oder radial bezüglich der Drehachse orientiert. Beispielsweise ist es möglich, dass ein derartiger Zwischenraum an einem Innenumfang der Wellendurchtrittsöffnung des Flussleitkörpers oder einem Außenumfang der Rotorwelle oder beiden vorhanden ist. Der Verbindungsabschnitt überbrückt diesen Zwischenraum. Auch wenn also der Verbindungsabschnitt beispielsweise eine Kavität zwischen Rotorwelle und Flussleitkörper nicht vollständig ausfüllt, also Hohlräume oder Zwischenräume bleiben, reicht das Material des thermoplastischen Kunststoffes dennoch aus, um den Verbindungskörper herzustellen oder auszubilden.

Der Flussleitkörper hat vorteilhaft einen um die Drehachse verlaufenden Kreisringbereich zum Leiten magnetischen Flusses, an dem keine Hintergreifstrukturen für den Verbindungskörper vorgesehen sind. Der sozusagen homogene oder nicht unterbrochene Kreisringbereich erhöht den Wirkungsgrad des Antriebsmotors. Der Kreisringbereich umfasst vorzugsweise mindestens 70%, zweckmäßigerweise mindestens 80%, noch weiter bevorzugt mindestens 90 oder 95 % der Querschnittsfläche des Flussleitkörpers quer zur Drehachse des Rotors.

Nachfolgend werden Ausführungsbeispiele der Erfindung anhand der Zeichnung erläutert. Es zeigen:
- Figur 1: eine Seitenansicht eines Motors, dessen Rotor in
- Figur 2: frontal von seiner Stirnseite dargestellt ist,
- Figur 3: eine Schnittdarstellung durch den Rotor gemäß Figur 2, etwa entlang einer Schnittlinie A-A,
- Figur 4: eine Schnittdarstellung durch den Motor gemäß Figur 2, etwa entlang einer Schnittlinie B-B,

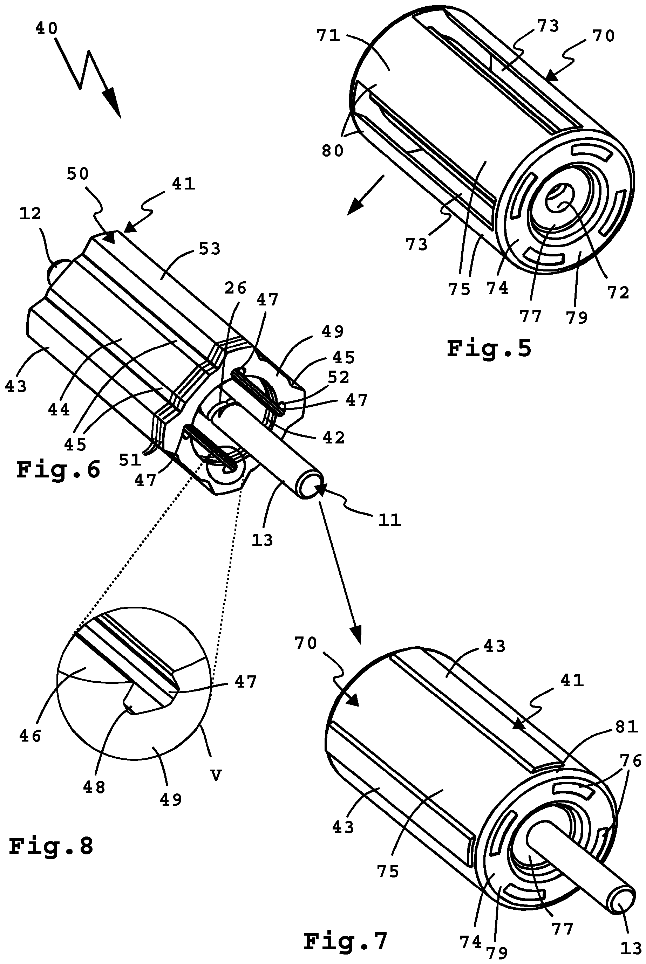

- Figur 5: einen Verbindungskörper und
- Figur 6: eine Rotorwelle sowie einen Flussleitkörper des Rotors gemäß Figur 2-4, der in
- Figur 7: perspektivisch schräg dargestellt ist,
- Figur 8: ein Detail aus Figur 6,
- Figur 9: eine Seitenansicht eine Variante des Rotors gemäß Figur 8 mit zusätzlichen Zwischenvorsprüngen,
- Figur 10: den Rotor gemäß Figur 9 von vorn,
- Figur 11: einen Querschnitt durch den Rotor gemäß Figur 9 etwa entsprechend einer Schnittlinie C-C,
- Figur 12: einen alternativen Rotor für den Motor gemäß Figur 1, der in
- Figur 13: den Rotor gemäß Figur 12 von einer Stirnseite her und in
- Figur 14: entlang einer Schnittlinie Q-Q der Figur 12 geschnitten dargestellt ist,
- Figur 15: eine Schnittdarstellung durch den Rotor gemäß Figur 13, etwa entlang einer Schnittlinie E-E,
- Figur 16: den Rotor gemäß Figur 12-15 perspektivisch schräg,
- Figur 17: eine Schnittdarstellung durch den Rotor gemäß Figur 16 etwa entlang einer Schnittlinie F-F,
- Figur 18: eine weitere Schnittdarstellung durch den Rotor gemäß Figur 16, etwa entlang einer Schnittlinie G-G,

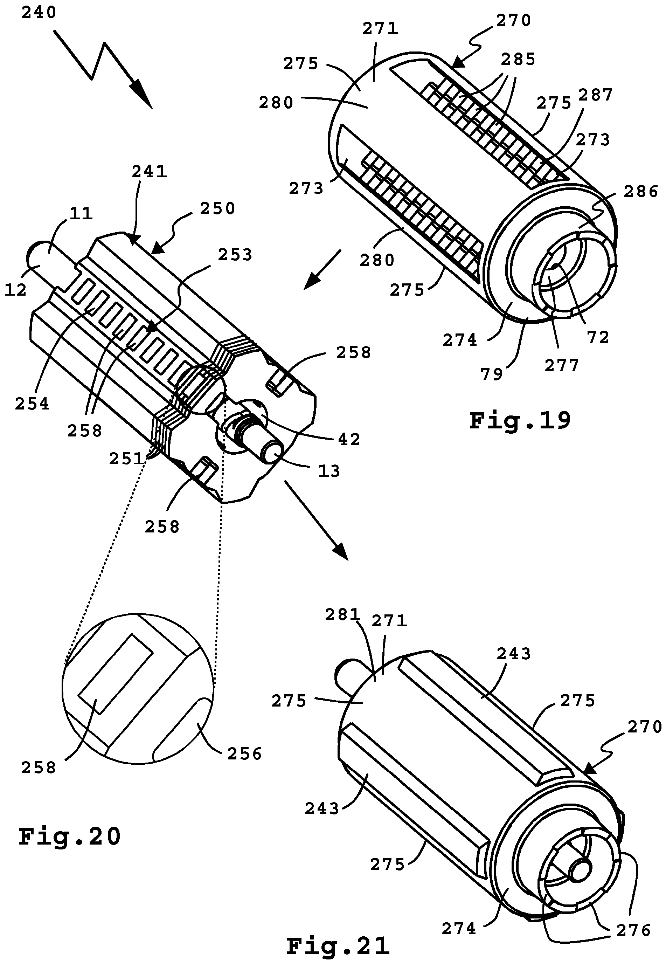

- Figur 19: einen Verbindungskörper und
- Figur 20: einen Flussleitkörper sowie eine Rotorwelle des Rotors gemäß Figuren 12-19, der in
- Figur 21: perspektivisch schräg dargestellt ist.

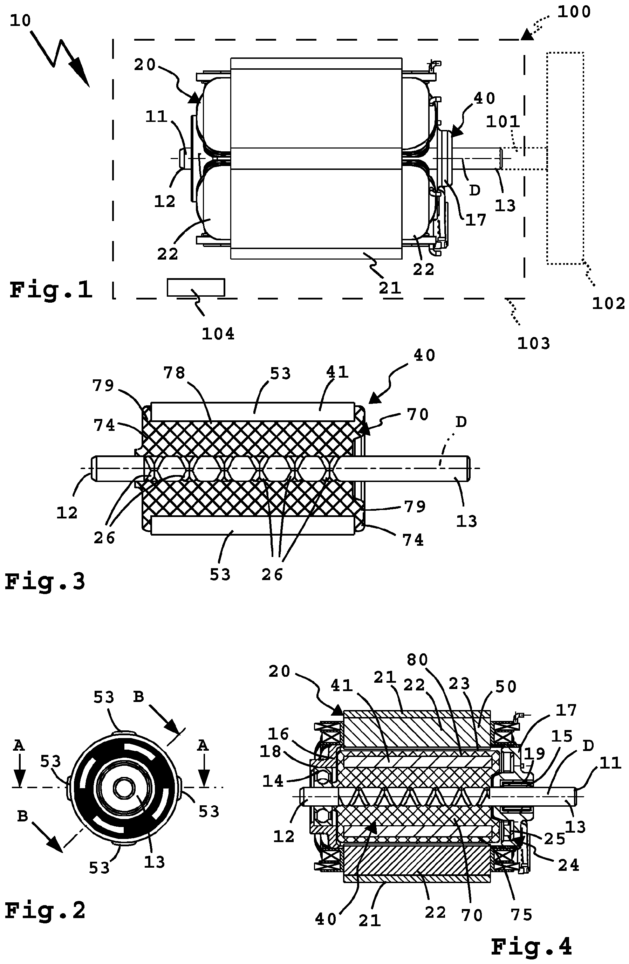

In Figur 1 ist eine Seitenansicht einer Hand-Werkzeugmaschine 100 mit einem elektrischen Motor 10 dargestellt, der direkt oder über ein nicht dargestelltes Getriebe eine Werkzeugaufnahme 101 antreibt. An der Werkzeugaufnahme 101 ist ein Werkzeug 102, nämlich ein Bearbeitungswerkzeug, befestigt. Bei dem Werkzeug 102 handelt es sich beispielsweise um ein Sägeblatt, ein Bohrfutter, eine Aufnahme für ein Schrauberbit oder dergleichen. Die Hand-Werkzeugmaschine 100 ist nur schematisch dargestellt und weist beispielsweise ein Maschinengehäuse 103 auf, in welchem der Motor 10 angeordnet ist.

In dem Maschinengehäuse 103 ist beispielsweise noch eine Ansteuerelektronik 104 zu elektrischen Ansteuerung des Motors 10 vorgesehen. Weitere Komponenten, so zum Beispiel einen Schalter zum Einschalten und Ausschalten des Motors 10, eine Drehzahlregelung oder dergleichen, sind aus Gründen der Vereinfachung nicht dargestellt. Jedenfalls wird der Motor 10 vorzugsweise elektronisch angesteuert. Elektrische Versorgungskomponenten, so zum Beispiel ein Netzkabel und/oder ein Akkupack oder dergleichen, sind ebenfalls optional möglich und nicht in der Zeichnung dargestellt.

Der Motor 10 weist eine Rotorwelle 11 auf, die an einander entgegengesetzten Seiten des Motors 10 einen Abtrieb 12 und einem Abtrieb 13 aufweist. Die Rotorwelle 11 ist an Lagern 14, 15 drehbar bezüglich eines Stators 20 um eine Drehachse D gelagert. Die Lager 14, 15, zum Beispiel Rollenlager, Wälzlager, Kugellager oder dergleichen, sind an stirnseitigen Lagerschilden 16, 17 vorgesehen. An den Lagerschilden 16, 17 sind Lageraufnahmen 18, 19 für die Lager 14, 15 vorgesehen.

Der Stator 20 weist beispielsweise einen Statorkern 21 auf, an dem Statorwicklungen 22 angeordnet sind. Die Statorwicklungen 22 könnte man auch als Erregerwicklungen bezeichnen, da sie ein Erregerfeld für den Rotor 40 erzeugen. Die Bestromung der Statorwicklungen 22 übernimmt die Ansteuerelektronik 104 in an sich bekannter Weise. Beispielsweise handelt es sich bei dem Motor 10 um einen elektronisch kommutierten Motor oder einen Switched-Reluctance-Motor.

Der Rotor 40 ist in dem Stator 20 mit einem Luftspalt 23 aufgenommen. Eine Sensoranordnung 24, die beispielsweise mindestens einen Sensor 25 umfasst, erfasst eine jeweilige Drehposition des Rotors 40 relativ zum Stator 20 beispielsweise anhand von Markierungen 76, 276 an der Stirnseite des Rotors 40. Die Markierungen 76, 276 sind beispielsweise optische Markierungen, Strichcodes oder dergleichen. Es versteht sich, dass auch eine sensorische Erfassung der jeweiligen Drehposition des Rotors 40 relativ zum Stator 20 mit induktiven Sensoren oder kapazitiven Sensoren auch möglich ist. Die Ansteuereinrichtung oder Ansteuerelektronik 104 steuert jedenfalls den Motor 10 in Abhängigkeit von einer jeweiligen Drehposition des Rotors 40 relativ zum Stator 20 an, d.h. sie bestromt die Statorwicklungen 22 entsprechend.

Der Rotor 40 sowie weitere, alternative Rotoren 140, 240, die ebenfalls im Stator 20 betrieben werden können, sind erfindungsgemäß ausgestaltet. Die Rotoren 40, 140, 240 weisen Verbindungskörper 70, 170, 270 auf, die aus einem thermoplastischen Kunststoff bestehen, zumindest im Wesentlichen daraus bestehen, und die jeweiligen Flussleitkörper 41, 141, 241 der Rotoren 40, 140, 240 mit der jeweils in einer Wellendurchtrittsöffnung 42 der Flussleitkörper 41, 141, 241 aufgenommenen Rotorwelle 11 mechanisch hoch belastbar verbinden. Die Bauteile der Rotoren 40, 140, 240 sind teilweise mit denselben Bezugsziffern versehen, zu Verdeutlichung von Unterschieden auch mit Bezugsziffern, die sich jeweils um 100 unterscheiden.

Die Flussleitkörper 41, 141, 241 sind beispielsweise von Blechpaketen 50, 150, 250 gebildet. Die Blechpakete 50, 150, 250 weisen beispielsweise Bleche 51, 151, 251 auf, die entlang der Drehachse D nebeneinander angeordnet sind bzw. aufeinander aufgeschichtet sind. Es ist möglich, dass die Blechpakete 50, 150, 250 vorder Herstellung des Verbindungskörpers 70, 170, 270 miteinander verbunden sind, beispielsweise verschweißt, verklebt, vernietet oder dergleichen. Das ist aber nicht unbedingt notwendig.

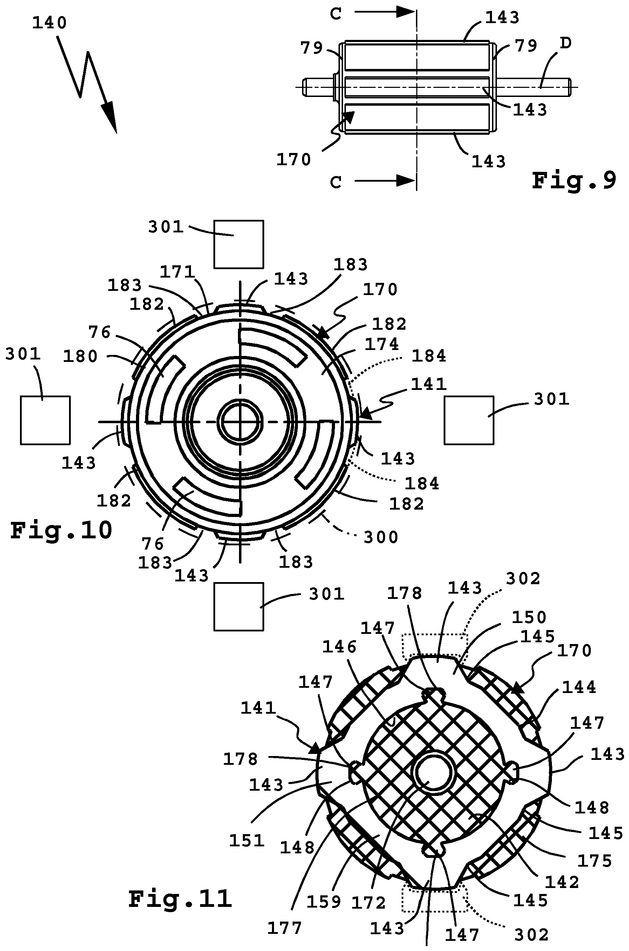

Es ist nämlich auch möglich, dass die Bleche 51, 151, 251 in eine in Figur 10 beispielhaft dargestellten Form 300 eingelegt werden, die anschließend mit dem thermoplastischen Kunststoff, beispielsweise einem Polyamid-Kunststoff, insbesondere einem faserverstärkten Polyamid-Kunststoff, gefüllt wird, welcher in der Form 300 dann aushärtet und den Verbindungskörper 70, 170, 270 ausbildet.

Eine vorteilhafte Ausführungsform der Erfindung sieht dabei vor, dass beispielsweise Magnete 301 vorgesehen sind, die einen Bestandteil der Form 300 bilden oder außerhalb derselben angeordnet sind, um den Flussleitkörper 41, 141, 241 in der Form 300 auszurichten, was nämlich für die Herstellung der Markierungen 76, 276 vorteilhaft ist, wenn sie als Erhebungen oder Vertiefungen oder sonstige Konturen am Grundkörper des Verbindungskörpers 70, 270, 170 ausgestaltet sind.

Alternativ können beispielsweise Halterungen 302, z.B. Haltevorsprünge, vorgesehen sein, um den jeweiligen Flussleitkörper 41, 141, 241 in der Form 300 auszurichten.

Die Flussleitkörper 41, 141, 241 müssen aber nicht in jedem Fall in der Gussform, zum Beispiel der Form 300, bezüglich ihrer Drehwinkelposition bezüglich der Drehachse D ausgerichtet sein, beispielsweise wenn es auf die Markierungen 76, 276 nicht ankommt.

Die Verbindungskörper 70, 170, 270 sind vorliegend im Wesentlichen zylindrisch. Sie stellen einen mechanisch stabilen Halt zwischen einerseits der Rotorwelle 11 und andererseits dem jeweiligen Flussleitkörper 41, 141, 241 her. Ein Kernbereich 77, 177, 277 des Verbindungskörpers 70, 170, 270 füllt die Wellendurchtrittsöffnung 42 des jeweiligen Flussleitkörpers 41, 141, 241 aus und stellt eine formschlüssige Verbindung zwischen der Rotorwelle 11 und dem jeweiligen Flussleitkörper 41, 141, 241 her.

An der Rotorwelle 11 ist eine Nutstruktur 26, beispielsweise in Gestalt von schraubenförmigen Rillen, insbesondere zweier sich kreuzender schraubenförmiger Rillen, vorgesehen, in die der Kunststoff des Verbindungskörpers 70, 170, 270 formschlüssig eingreift.

Bei einem erfindungsgemäß ausgestalteten Rotor ist es zweckmäßig, metallische Bauteile, also insbesondere ein Blechpaket oder eine sonstige Konfiguration des Flussleitkörpers, in ausreichendem Maße mit dem thermoplastischen Kunststoff zu umspritzen, um beispielsweise Luftstrecken und Kriechstrecken im elektrisch erforderlichen Umfang zu gewährleisten. Eine Maßnahme dazu ist, dass die Rotorwelle in ausreichendem Maße umspritzt ist, beispielsweise mit den Kernbereichen 77, 177, 277.

Ein Außenumfang der Rotorwelle 11, an welchem die Nutstruktur 26 vorgesehen ist, ist an einem Halte-Innenumfang 72 des Kernbereichs 77, 177, 277 zumindest in Richtung der Drehachse D fest gehalten.

Der Kernbereich 77, 177, 277 hat zweckmäßigerweise an jeder Stelle in Längsrichtung der Drehachse D eine Mindestdurchmesser, beispielsweise von etwa 1,5cm - 3 cm , vorzugsweise etwa 2 cm, um eine elektrische Isolation zwischen einerseits der Rotorwelle 11 und andererseits dem Flussleitkörper 41, 141, 241 sicher zu stellen.

Der thermoplastische Kunststoff des Verbindungskörpers 70, 170, 270 schrumpft sozusagen auf die Rotorwelle 11 auf, stellt also dort einen festen Halt her. Beim Flussleitkörper 41, 141, 241 steht das jedoch ohne weiteres nicht. Da nämlich der Kunststoff des Verbindungskörpers 70, 170, 270 eine Tendenz zur radialen Verdichtung um die Rotorwelle 11 herum hat, sind besondere Maßnahmen notwendig, dass das Kunststoffmaterial einen in radialer Richtung ausreichenden Halt am Flussleitkörper 41, 141, 241 hat und somit der Flussleitkörper 41, 141, 241 in ausreichendem Maße fest mit der Rotorwelle 11 verbunden ist.

Eine hierfür vorgeschlagene Maßnahme ist es, dass der Verbindungskörper 70, 170, 270 einen Außenmantel 71, 171, 271 ausbildet, der den Flussleitkörper 41, 141, 241 außenseitig ummantelt. Diese Ummantelung ist jedoch nicht vollständig, das heißt es können beispielsweise Abschnitte 43, 143, 243 des Flussleitkörpers 41, 141, 241 nach radial außen vor den Außenmantel 71, 171, 271 vorstehen.

An dem Außenmantel 71, 171, 271 sind Durchtrittsöffnungen 73 vorgesehen, durch welche die Abschnitte 43, 143, 243 des Flussleitkörpers 41, 141, 241 nach radial außen in den Luftspalt 23 vorstehen.

Der Außenumfang eines Flussleitkörpers 41, 141, 241 ist vorteilhaft zu einer optimalen Verzahnung mit dem Verbindungskörper 70, 170, 270 vorgesehen. Beispielsweise befinden sich zwischen den als Längsvorsprüngen ausgestalteten, radial vorstehenden Abschnitten 43, 143, 243 jeweils eine Vertiefung 64. Zwischen den Abschnitten 43, 143, 243, die man auch als Höcker bezeichnen könnte, sind weiterhin noch Längsnuten 45 vorgesehen, in die ebenfalls das Kunststoffmaterial des Verbindungskörpers 70, 170, 270 eingreift und somit eine drehfeste und jedenfalls formschlüssige Verbindung herstellt.

Am Innenumfang 46 der Wellendurchtrittsöffnung 42 des Flussleitkörpers 41, der im Wesentlichen kreisrund ist, sind Längsnuten 47 vorgesehen, beispielsweise in der Art von Hinterschnitten 48, in die das Kunststoffmaterial des Verbindungskörpers 70 eingreift. Die Längsnuten 47 erstrecken sich parallel zur Drehachse D und stellen Hintergreifaufnahmen 52 dar.

Das Kunststoffmaterial des Verbindungskörpers 70 greift also am Innenumfang 46 mit Hintergreifabschnitten 78 in die Hintergreifaufnahmen 52 ein, um somit einen optimalen Formschluss zwischen dem Flussleitkörper 41 und der Rotorwelle 11 herzustellen. Der Kernbereich 77 stellt dabei den Verbindungsabschnitt dar, der mit den quasi nach radial außen vorstehenden und sternförmig angeordneten Hintergreifabschnitten 78 mit dem Flussleitkörper 41 verzahnt ist bzw. in Hintergriff ist.

Weiterhin bildet eine vordere und hintere Stirnwand 74 einen radialen Verbindungsabschnitt 79 zu dem Außenmantel 71, der den Außenumfang des Flussleitkörpers 41 ummantelt und somit einen weiteren Hintergreifabschnitt 80 bildet.

Der Außenmantel 71 ist durch die Abschnitte 43 sozusagen segmentiert, weist also Mantelabschnitte 75 auf. Diese sind jedoch zumindest durch die Stirnwände 74 miteinander verbunden, vorzugsweise auch durch einen in Umfangsrichtung umlaufenden, ringförmigen Wandabschnitt 81.

Beim Rotor 140 ist das Konzept noch etwas verfeinert. Das Blechpaket 150 des Rotors 140 hat an seiner Wellendurchtrittsöffnung 142, nämlich deren Innenumfang 146, Längsnuten 147, die als Hintergreifaufnahmen für den Verbindungskörper 70 dienen. Der Flussleitkörper 141 ist radial außen, d.h. an seinem Außenumfang, durch den Verbindungskörper 170 ummantelt, der dort einen Außenmantel 171 ausbildet. Der Außenmantel 171 ist also in einem Hintergriff mit dem Flussleitkörper 141. Man kann auch sagen, dass der Flussleitkörper 141 von dem Außenmantei 171 und somit vom Verbindungskörper 170 außenseitig umgriffen wird. Radial gesehen, d.h. von der Rotorwelle 11 aus, ist der Außenmantel 171 im Hintergriff mit dem Flussleitkörper 141 und bildet Hintergreifabschnitte 180 aus.

Zwischen dem Innenumfang 46 und dem Außenumfang des Flussleitkörpers 41 ist ein Kreisringbereich 49 ohne Hintergreifkonturen vorhanden, der für den magnetischen Fluss durch den Rotor 40 bereitsteht.

Wie bei dem Flussleitkörper 41 sind auch beim Flussleitkörper 141 die Längsnuten 47, 147 im Bereich der nach radial außen vor den Verbindungskörper 70, 170 vorstehenden Abschnitte 43, 143 angeordnet. Somit ist der Querschnitt, der für einen magnetischen Fluss bereitsteht, bei beiden Flussleitkörpern 41, 141 nicht durch die Hintergreifabschnitte 78, 178, das heißt die Längsnuten 47, 147 geschwächt, weil nämlich die Querschnittsfläche, die aufgrund der Längsnuten 47, 147 verkleinert ist, durch die Abschnitte 43, 143 in ausreichendem Maße vergrößert ist. Die Feldlinien können also quasi an den Querschnitten der Längsnuten 47, 147 vorbei verlaufen.

Der Rotor 140 ist gegenüber dem Rotor 40 in Bezug auf die Geräuschentwicklung optimiert. Zwischen den Abschnitten 143 des Flussleitkörpers 141 stehen nämlich Zwischenvorsprünge 182 des Außenmantels 171 nach radial außen vor. Die Zwischenvorsprünge 182 stehen vorzugsweise etwas so weit vor den eigentlichen Außenmantel 171, d.h. die Mantelwand, vor, wie die Abschnitte 143 des Flussleitkörpers 141. Bevorzugt sind die Zwischenvorsprünge 182 an ihrem Außenumfang gekrümmt, etwa entsprechend dem kreisrunden Außenumfang des Rotors 140. Dadurch ist eine im Wesentlichen gleichmäßige Luftströmung möglich. Zwischen den Zwischenvorsprüngen 182 und den vorstehenden Abschnitten 143 des Flussleitkörpers 141 sind zweckmäßigerweise Vertiefungen 183 vorgesehen, die einen Eingriff der Halterungen 302 erleichtern.

Die Vertiefungen 183 sind optional nach dem Vergießen des Flussleitkörpers 141, d.h. nach der Ausbildung des Verbindungskörpers 170 mit einer Masse 184 verfüllt, so dass ein im Wesentlichen homogener Außenumfang des Rotors 140 gebildet ist. Der Luftspalt 23 ist dadurch sehr gleichmäßig bzw. an jeder Winkelposition gleich breit oder zumindest im Wesentlichen gleich breit.

Es wäre aber auch möglich, den Rotor 140 am gesamten Außenumfang mit dem Material des Verbindungskörpers 170 zu umhüllen oder einzumanteln. Es ist möglich (aber nicht in allen Fällen nötig), dass dann die Magnete 301 die Drehwinkelposition des Flussleitkörpers 141 in der Form 300 sicherstellen. Die Magnete 301 können beispielsweise Permanentmagnete, Elektromagnete oder Kombinationen davon sein.

Die Stirnwände 74, 174 bzw. stellen bei den Rotoren 40, 140 einen festen und sicheren Halt zwischen dem Kernbereich 77, 177 und dem den Flussleitkörper 41, 141 hintergreifenden oder übergreifenden Außenmantel 71, 171 bereit.

Am Beispiel des Rotors 240 soll nun noch eine weitere, ebenfalls sehr günstige Methode dargestellt werden, einen Hintergriff zwischen Verbindungskörper und Flussleitkörper herzustellen.

Von einem Kernbereich 277 des Verbindungskörpers 270 erstrecken sich nämlich Verbindungsarme 285 nach radial außen, die den Verbindungskörper 270 durchdringen. Die Verbindungsarme 285 bilden beispielsweise Verbindungsabschnitte 287, welche die Mantelabschnitte 275 mit dem Kernbereich 277 verbinden. Die Mantelabschnitte 275 bilden dabei Hintergreifabschnitte 280.

Der Flussleitkörper 241 hat eine Kanalstruktur 253 mit Kanälen 254, die Verbindungsarme 285 aufnehmen. Zweckmäßigerweise ist vorgesehen, dass die Kanäle 254 jeweils Hintergreifaufnahmen 255 bilden.

Die Kanäle 254 sind jeweils von Gruppen mehrerer Bleche 251 des Blechpakets 250 des Flussleitkörpers 241 gebildet. Die Kanäle 254 sind bezogen auf die Drehachse D drehwinkelversetzt, d.h. dass an nebeneinanderliegenden Abschnitten entlang der Rotorwelle 11 um beispielsweise 90° drehwinkelversetzte Kanäle 254 vorgesehen sind. Die Kanäle 254 weisen beispielsweise Kanalabschnitte 256 auf, die sich von radial innen, nämlich von der Wellendurchtrittsöffnung 42 her, in den Flussleitkörper 241 hinein erstrecken. Daran schließt sich dann ein jeweiliger Kommunikationsabschnitt 257 an, der parallel oder etwa parallel zur Drehachse D verläuft.

Über den Kommunikationsabschnitt 257, der von benachbarten, zueinander drehwinkelversetzten Blechen 251 bereitgestellt wird, fließt der thermoplastische Kunststoff aus den Kanalabschnitten 256 in radial äußere Kanalabschnitte 258 hinein, die außen am Flussleitkörper 241 ausmünden. Das durch die Kanäle 254 fließende Kunststoffmaterial kann also frei zwischen dem Außenbereich des Flussleitkörpers 241, wo es den Außenmantel 271 bildet, und dem Kernbereich 277 fließen und auf diesem Wege die Verbindungsarme 285 ausbilden.

Die Verbindungsarme 285 haben eine Stufe, nämlich im Bereich der Kommunikationsabschnitte 257, so dass sie auch dort einen Hintergriff des Verbindungskörpers 270 mit dem Flussleitkörper 241 herstellen und Hintergreifabschnitte 288 ausbilden.

Das thermoplastische Kunststoffmaterial des Verbindungskörpers eines erfindungsgemäß ausgestalteten Rotors kann auch zur Ausbildung von weiteren nützlichen Konturen dienen, so zum Beispiel für einen Hülsenkörper 286, der im Bereich des Abtriebs 13 vor die Stirnwand 74 vorsteht.

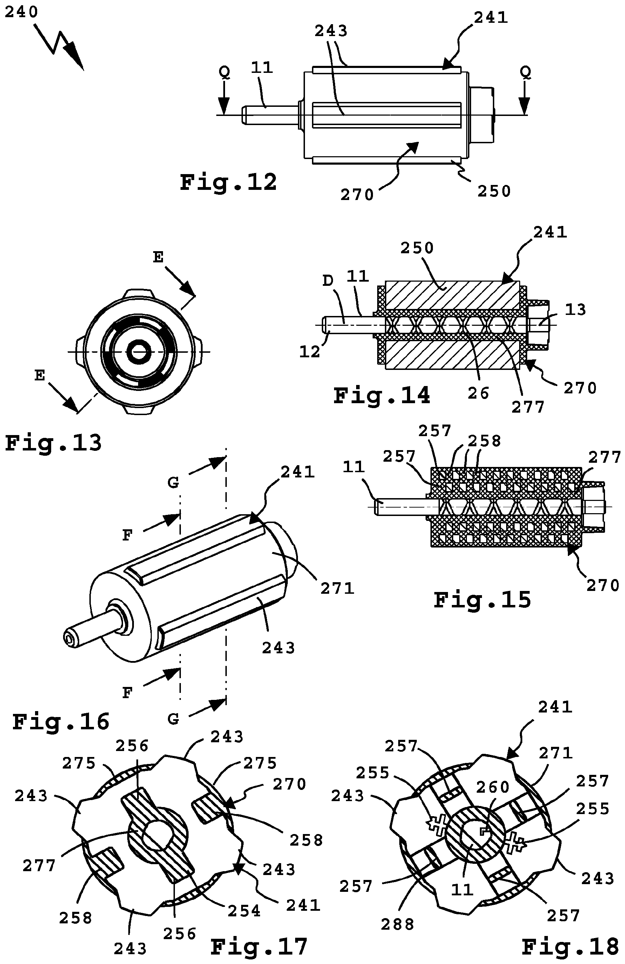

In Figur 18 sind noch alternative Ausführungsformen angedeutet. Selbstverständlich ist es nämlich vorteilhaft, wenn auch die Rotorwelle 11 in einem Hintergriff mit dem Verbindungskörper 270 ist. Beispielsweise ist eine L-förmige Hintergreifaufnahme 260 vorgesehen, in die das Kunststoffmaterial des Verbindungskörpers 270 eingedrungen ist. Die Hintergreifaufnahme 260 ist hakenförmig, das heißt sie erstreckt sich mit mindestens einem quer zur Radiallinie verlaufenden Schenkel in die Rotorwelle 11 hinein.

Es können auch außen im Blechpaket bzw. Flussleitkörper 241 alternative Hintergreifaufnahmen vorgesehen sein, so zum Beispiel tannenbaumartige Hintergreifaufnahmen 245, die einander gegenüberliegend oder auch in anderen Winkelpositionen relativ zueinander in Blechpaket 250 ausgebildet sind.

## Patentansprüche

1. Hand-Werkzeugmaschine (100) oder Staubsauger mit einem elektrischen Motor (10), wobei der Motor (10) einen Stator (20) aufweist, in welchem ein Rotor (40; 140; 240) des Motors (10) um eine Drehachse (D) drehbar aufgenommen ist, wobei der Rotor (40; 140; 240) einen magnetischen Flussleitkörper (41, 141; 241), insbesondere ein Blechpaket (50) aufweist, der eine Wellendurchtrittsöffnung (42) aufweist, wobei eine Rotorwelle (11) die Wellendurchtrittsöffnung (42) durchsetzt und mit ihren Längsenden vor den Flussleitkörper (41, 141; 241) vorsteht, und wobei die Rotorwelle (11) anhand eines Verbindungskörpers (70; 170; 270) aus Kunststoff drehfest mit dem Flussleitkörper (41, 141; 241) verbunden ist, wobei der Verbindungskörper (70; 170; 270) durch Vergießen des Flussleitkörpers (41, 141; 241) mit der Rotorwelle (11) mit einem thermoplastischen Kunststoff hergestellt ist, wobei der Verbindungskörper (70; 170; 270) mindestens einen Verbindungsabschnitt (79; 287) aufweist, der die Rotorwelle (11) und den Flussleitkörper (41, 141; 241) verbindet und mindestens einen Hintergreifabschnitt (80; 180; 280) aufweist, der in einem Hintergriff radial zur Drehachse (D) mit dem Flussleitkörper (41, 141; 241) oder der Rotorwelle (11) ist, **dadurch gekennzeichnet, dass** in dem Flussleitkörper (41, 141; 241) und/oder der Rotorwelle (11) mindestens ein Kanal (254) für den thermoplastischen Kunststoff angeordnet ist, der zur Bildung der mindestens einen Hintergreifaufnahme oder des mindestens einen Hintergreifvorsprungs mindestens einen zu der Wellendurchtrittsöffnung (42) radial beabstandeten und mit einer Richtungskomponente in Richtung der Drehachse (D) verlaufenden Kanalabschnitt (257) aufweist.

2. Hand-Werkzeugmaschine (100) oder Staubsauger nach Anspruch 1, **dadurch gekennzeichnet, dass** sich der mindestens eine Kanal (254) für den thermoplastischen Kunststoff an dem Flussleitkörper (41, 141; 241) zwischen der Wellendurchtrittsöffnung (42) und seinem Außenumfang erstreckt und/oder der Verbindungskörper (70; 170; 270) einen die Rotorwelle (11) ringförmig ummantelnden Kernbereich (77; 177; 277) aufweist.

3. Hand-Werkzeugmaschine (100) oder Staubsauger nach Anspruch 1 oder 2, **dadurch gekennzeichnet, dass** der Verbindungskörper (70; 170; 270), insbesondere der mindestens eine Hintergreifabschnitt (80; 180; 280), einen den Flussleitkörper (41, 141; 241) an seinem radialen Außenumfang umhüllenden Mantelabschnitt (75; 175; 275) oder Außenmantel (71; 171; 271) umfasst.

4. Hand-Werkzeugmaschine (100) oder Staubsauger nach Anspruch 3, **dadurch gekennzeichnet, dass** der Mantelabschnitt (75; 175; 275) mit einem die Rotorwelle (11) umschließenden Kernbereich (77; 177; 277) des Verbindungskörpers (70; 170; 270) anhand mindestens eines den Flussleitkörper (41, 141; 241) durchsetzenden Verbindungsarms (285) des Verbindungskörpers (70; 170; 270) und/oder anhand eines an einer Stirnseite des Flussleitkörpers (41, 141; 241) angeordneten Wandabschnitts (74) oder Armabschnitts des Verbindungskörpers (70; 170; 270) verbunden ist und/oder dass insbesondere parallel zur Drehachse (D) verlaufende Abschnitte (43; 143; 243) des Flussleitkörpers (41, 141; 241) nach radial außen vor den Verbindungskörper (70; 170; 270) vorstehen.

5. Hand-Werkzeugmaschine (100) oder Staubsauger nach Anspruch 3 oder 4, **dadurch gekennzeichnet, dass** der Verbindungskörper (70; 170; 270) an seinem Außenumfang zwischen zwei vor den Verbindungskörper (70; 170; 270) radial nach außen vorstehenden Abschnitten (43; 143; 243) des Flussleitkörpers (41, 141; 241) mindestens einen Zwischenvorsprung (182) aufweist, wobei der mindestens eine Zwischenvorsprung (182) etwa so weit vor den Außenumfang des Verbindungskörpers (70; 170; 270) vorsteht wie die benachbarten Abschnitte (43; 143; 243) des Flussleitkörpers (41, 141; 241), und/oder dass der Außenmantel (71; 171; 271) des Verbindungskörpers (70; 170; 270) Vertiefungen (183) aufweist, in welchen die vor den Verbindungskörper (70; 170; 270) radial vorstehenden Abschnitte (43; 143; 243) des Flussleitkörpers (41, 141; 241) angeordnet sind.

6. Hand-Werkzeugmaschine (100) oder Staubsauger nach einem der vorhergehenden Ansprüche, **dadurch gekennzeichnet, dass** an dem Flussleitkörper (41, 141; 241) und/oder der Rotorwelle (11) zur Bildung mindestens einer Hintergreifaufnahme für den mindestens einen Hintergreifabschnitt (80; 180; 280) eine in der Art eines Labyrinths ausgestaltete und mit dem thermoplastischen Kunststoff ausgefüllte Kanalstruktur (253) vorgesehen ist.

7. Hand-Werkzeugmaschine (100) oder Staubsauger nach einem der vorhergehenden Ansprüche, **dadurch gekennzeichnet, dass** mindestens eine Hintergreifaufnahme oder mindestens ein Hintergreifvorsprung für den mindestens einen Hintergreifabschnitt (80; 180; 280) an einem Innenumfang der Wellendurchtrittsöffnung (42) angeordnet ist und/oder mindestens eine Hintergreifaufnahme oder ein Hintergreifvorsprung für den mindestens einen Hintergreifabschnitt (80; 180; 280) sich im Wesentlichen über die gesamte Längslänge des Flussleitkörpers (41, 141; 241) oder der Rotorwelle (11) bezüglich der Drehachse (D) erstreckt und/oder in der Art einer Längsnut oder Längsrippe ausgestaltet ist.

8. Hand-Werkzeugmaschine (100) oder Staubsauger nach einem der vorhergehenden Ansprüche, **dadurch gekennzeichnet, dass** die Rotorwelle (11) und/oder der Flussleitkörper (41, 141; 241) mit eine insbesondere Rillen aufweisende Nutstruktur (26) mit mindestens einer Nut aufweist, in die der Verbindungskörper (70; 170; 270) eingreift, und/oder eine Rippenstruktur mit mindestens einer Rippe aufweist, die in den Verbindungskörper (70; 170; 270) eingreift und/oder der Hintergreifabschnitt (80; 180; 280) des Verbindungskörpers (70; 170; 270) hakenförmig ist und/oder eine Hakenstruktur umfasst und/oder der Verbindungskörper (70; 170; 270) mit der Rotorwelle (11) und/oder dem Flussleitkörper (41, 141; 241) anhand einer zapfenartigen oder tannenbaumartigen Hintergreifstruktur verbunden ist.

9. Hand-Werkzeugmaschine (100) oder Staubsauger nach Anspruch 8, **dadurch gekennzeichnet, dass** die Hakenstruktur des Verbindungskörpers (70; 170; 270) sich von einem die Rotorwelle (11) umschließenden Kernbereich (77; 177; 277) des Verbindungskörpers (70; 170; 270) nach radial außen erstreckt und in eine Hakenaufnahme, insbesondere einen Hinterschnitt, am Innenumfang der Wellendurchtrittsöffnung (42) des Flussleitkörpers (41, 141; 241) eingreift.

10. Hand-Werkzeugmaschine (100) oder Staubsauger nach einem der vorhergehenden Ansprüche, **dadurch gekennzeichnet, dass** der Flussleitkörper (41, 141; 241) durch ein Blechpaket (50) mit mehreren Blechen (51; 151; 251) gebildet ist und die Bleche (51; 151; 251) zumindest teilweise als Gleichteile ausgestaltet sind.

11. Hand-Werkzeugmaschine (100) oder Staubsauger nach Anspruch 10, **dadurch gekennzeichnet, dass** die Bleche (51; 151; 251) mindestens eine Hintergreifaufnahme und/oder mindestens einen Hintergreifvorsprung und/oder mindestens einen Kanalabschnitt (256; 258) aufweisen, wobei die Bleche (51; 151; 251) bezüglich der Drehachse (D) nebeneinander angeordnet sind und einzeln oder gruppenweise einen Drehwinkelversatz bezüglich der Drehachse (D) aufweisen, so dass die durch die jeweiligen Bleche (51; 151; 251) begrenzten Hintergreifaufnahmen oder Hintergreifvorsprünge oder Kanalabschnitte (256; 258) voneinander verschiedene Drehwinkelpositionen bezüglich der Drehachse (D) haben.

12. Hand-Werkzeugmaschine (100) oder Staubsauger nach Anspruch 10 oder 11, **dadurch gekennzeichnet, dass** durch nebeneinander angeordnete Gleichteil-Bleche oder Gruppen von Gleichteil-Blechen begrenzte und unterschiedliche Drehwinkelpositionen aufweisende Hintergreifaufnahmen oder Hintergreifvorsprünge oder Kanalabschnitte (256; 258) miteinander kommunizieren und von mindestens einem Verbindungsabschnitt (79; 287) des Verbindungskörpers (70; 170; 270) durchsetzt sind.

13. Hand-Werkzeugmaschine (100) oder Staubsauger nach einem der vorhergehenden Ansprüche, **dadurch gekennzeichnet, dass** der mindestens eine Verbindungsabschnitt (79; 287) einen Zwischenraum überbrückt, der sich durch ein Schwinden des thermoplastischen Kunststoffes bei seinem Aushärten zwischen dem Flussleitkörper (41, 141; 241), insbesondere einem Innenumfang der Wellendurchtrittsöffnung (42) des Flussleitkörpers (41, 141; 241), und der Rotorwelle (11), insbesondere einem Außenumfang der Rotorwelle (11), ausbildet, und/oder der thermoplastische Kunststoff faserverstärkt und/oder mit oberhalb der Schmelztemperatur des thermoplastischen Kunststoffes schmelzfähigen Füllkörpern und/oder Glaskugeln, verstärkt ist und/oder ein Polyamid-Kunststoff ist.

14. Verfahren zur Herstellung eines elektrischen Motors (10) für die Verwendung in einer Hand-Werkzeugmaschine (100) oder einem Staubsauger, wobei der Motor (10) einen Stator (20) aufweist, in welchem ein Rotor (40; 140; 240) des Motors (10) um eine Drehachse (D) drehbar aufgenommen ist, wobei der Rotor (40; 140; 240) einen magnetischen Flussleitkörper (41, 141; 241), insbesondere ein Blechpaket (50) aufweist, der eine Wellendurchtrittsöffnung (42) aufweist, wobei die eine Rotorwelle (11) die Wellendurchtrittsöffnung (42) durchsetzt und mit ihren Längsenden vor den Flussleitkörper (41, 141; 241) vorsteht, und wobei die Rotorwelle (11) anhand eines Verbindungskörpers (70; 170; 270) aus Kunststoff drehfest mit dem Flussleitkörper (41, 141; 241) verbunden ist, wobei das Verfahren ein Vergießen des Flussleitkörpers (41, 141; 241) mit der Rotorwelle (11) mit einem thermoplastischen Kunststoff zur Herstellung des Verbindungskörpers (70; 170; 270) umfasst, wobei der Verbindungskörper (70; 170; 270) mindestens einen Verbindungsabschnitt (79; 287) aufweist, der die Rotorwelle (11) und den Flussleitkörper (41, 141; 241) verbindet und mindestens einen Hintergreifabschnitt (80; 180; 280) aufweist, der in einem Hintergriff radial zur Drehachse (D) mit dem Flussleitkörper (41, 141; 241) und/oder der Rotorwelle (11) ist, wobei in dem Flussleitkörper (41, 141; 241) und/oder der Rotorwelle (11) mindestens ein Kanal (254) für den thermoplastischen Kunststoff angeordnet ist, der zur Bildung der mindestens einen Hintergreifaufnahme oder des mindestens einen Hintergreifvorsprungs mindestens einen zu der Wellendurchtrittsöffnung (42) radial beabstandeten und mit einer Richtungskomponente in Richtung der Drehachse (D) verlaufenden Kanalabschnitt (257) aufweist.

## Claims

1. Hand-operated power tool (100) or vacuum cleaner with an electric motor (10), wherein the motor (10) comprises a stator (20), in which a rotor (40; 140; 240) of the motor (10) is accommodated for rotation about an axis of rotation (D), wherein the rotor (40; 140; 240) comprises a magnetic flux conducting body (41; 141; 241), in particular a laminated core (50), having a shaft through-opening (42), wherein a rotor shaft (11) passes through the shaft through-opening (42) and projects with its longitudinal ends in front of the flux conducting body (41; 141; 241), and wherein the rotor shaft (11) is non-rotatably connected to the flux conducting body (41; 141; 241) by way of a connecting body (70; 170; 270) made of plastic, wherein the connecting body (70; 170; 270) is produced by potting the flux conducting body (41; 141; 241) with the rotor shaft (11) using a thermoplastic plastic material, wherein the connecting body (70; 170; 270) comprises at least one connecting section (79; 287), which connects the rotor shaft (11) to the flux conducting body (41; 141; 241) and has at least one engagement-from-behind section (80; 180; 280) in engagement from behind radially to the axis of rotation (D) with the flux conducting body (41; 141; 241) or the rotor shaft (11), **characterised in that** in the flux conducting body (41; 141; 241) and/or in the rotor shaft (11) there is provided at least one passage (254) for the thermoplastic plastic material, which passage (254) has at least one passage section (257) located at a radial distance from the shaft through-opening (42) and extending in the direction of the axis of rotation (D) with a directional component to form the at least one engagement-from-behind receptacle or the at least one engagement-from-behind projection.

2. Hand-operated power tool (100) or vacuum cleaner according to claim 1, **characterised in that** the at least one passage (254) for the thermoplastic plastic material extends at the flux conducting body (41; 141; 241) between the shaft through-opening (42) and its outer circumference, and/or **in that** the connecting body (70; 170; 270) has a core region (77; 177; 277), which encases the rotor shaft (11) in an annular arrangement.

3. Hand-operated power tool (100) or vacuum cleaner according to claim 1 or 2, **characterised in that** the connecting body (70; 170; 270), in particular the at least one engagement-from-behind section (80; 180; 280), comprises a casing section (75; 175; 275) or an outer casing (71; 171; 172), which encases the flux conducting body (41; 141; 241) at its radial outer circumference.

4. Hand-operated power tool (100) or vacuum cleaner according to claim 3, **characterised in that** the casing section (75; 175; 275) is connected to a core region (77; 177; 277) of the connecting body (70; 170; 270), which encloses the rotor shaft (11), by way of at least one connecting arm (285) of the connecting body (70; 170; 270), which passes through the flux conducting body (41; 141; 241), and/or by way of a wall section (74) or arm section of the connecting body (70; 170; 270), which is located at an end face of the flux conducting body (41; 141; 241), and/or **in that** sections (43; 143; 243) of the flux conducting body (41; 141; 241) which extend parallel to the axis of rotation (D) in particular project radially outwards in front of the connecting body (70; 170; 270).

5. Hand-operated power tool (100) or vacuum cleaner according to claim 3 or 4, **characterised in that** the connecting body (70; 170; 270) has at its outer circumference between two sections (43; 143; 243) of the flux conducting body (41; 141; 241) which project radially outwards in front of the connecting body (70; 170; 270) at least one intermediate projection (182), wherein the at least one intermediate projection (182) projects in front of the outer circumference of the connecting body (70; 170; 270) about as far as the adjacent sections (43; 143; 243) of the flux conducting body (41; 141; 241), and/or **in that** the outer casing (71; 171; 172) of the connecting body (70; 170; 270) has recesses (183), in which the sections (43; 143; 243) of the flux conducting body (41; 141; 241) which project radially in front of the connecting body (70; 170; 270) are located.

6. Hand-operated power tool (100) or vacuum cleaner according to any of the preceding claims, **characterised in that** a passage structure (253) designed in the manner of a labyrinth and filled with the thermoplastic plastic material is provided on the flux conducting body (41; 141; 241) and/or the rotor shaft (11) to form at least one engagement-from-behind receptacle for the at least one engagement-from-behind section (80; 180; 280).

7. Hand-operated power tool (100) or vacuum cleaner according to any of the preceding claims, **characterised in that** at least one engagement-from-behind receptacle or at least one engagement-from-behind projection for the at least one engagement-from-behind section (80; 180; 280) is located at an inner circumference of the shaft through-opening (42), and/or at least one engagement-from-behind receptacle or at least one engagement-from-behind projection for the at least one engagement-from-behind section (80; 180; 280) substantially extends along the entire length of the flux conducting body (41; 141; 241) or the rotor shaft (11) relative to the axis of rotation (D) and/or is designed in the manner of a longitudinal groove or a longitudinal rib.

8. Hand-operated power tool (100) or vacuum cleaner according to any of the preceding claims, **characterised in that** the rotor shaft (11) and/or the flux conducting body (41; 141; 241) comprise(s) a groove structure (26) having flutes in particular, with at least one groove with which the connecting body (70; 170; 270) engages, and/or a rib structure with at least one rib which engages with the connecting body (70; 170; 270), and/or **in that** the engagement-from-behind section (80; 180; 280) of the connecting body (70; 170; 270) is hook-shaped and/or comprises a hook structure, and/or **in that** the connecting body (70; 170; 270) is connected to the rotor shaft (11) and/or the flux conducting body (41; 141; 241) by way of a peg-like or pine tree-like engagement-from-behind structure.

9. Hand-operated power tool (100) or vacuum cleaner according to claim 8, **characterised in that** the hook structure of the connecting body (70; 170; 270) extends radially outwards from a core region (77; 177; 277) of the connecting body (70; 170; 270), which encloses the rotor shaft (11), and engages with a hook receptacle, in particular an undercut, at the inner circumference of the shaft through-opening (42) of the flux conducting body (41; 141; 241).

10. Hand-operated power tool (100) or vacuum cleaner according to any of the preceding claims, **characterised in that** the flux conducting body (41; 141; 241) is represented by a laminated core (50) with a plurality of sheets (51; 151; 251) and the sheets (51; 151; 251) are at least partially designed as identical parts.

11. Hand-operated power tool (100) or vacuum cleaner according to claim 10, **characterised in that** the sheets (51; 151; 251) have at least one engagement-from-behind receptacle and/or at least one engagement-from-behind projection and/or at least one passage section (256; 258), wherein the sheets (51; 151; 251) are arranged side by side relative to the axis of rotation (D) and individually or in groups have a rotary angle offset relative to the axis of rotation (D), so that engagement-from-behind receptacles or engagement-from-behind projections or passage sections (256; 258) bounded by the respective sheets (51; 151; 251) have rotary angle positions relative to the axis of rotation (D) which differ from one another.

12. Hand-operated power tool (100) or vacuum cleaner according to claim 10 or 11, **characterised in that** engagement-from-behind receptacles or engagement-from-behind projections or passage sections (256; 258) bounded by identical sheets or groups of identical sheets and having different rotary angle positions communicate with one another, and at least one connecting section (79; 287) of the connecting body (70; 170; 270) passes through them.

13. Hand-operated power tool (100) or vacuum cleaner according to any of the preceding claims, **characterised in that** the at least one connecting section (79; 287) bridges a space formed as a result of the shrinking of the thermoplastic plastic material in the curing process between the flux conducting body (41; 141; 241), in particular an inner circumference of the shaft through-opening (42) of the flux conducting body (41; 141; 241), and the rotor shaft (11), in particular an outer circumference of the rotor shaft (11), and/or **in that** the thermoplastic plastic material is fibre-reinforced and/or reinforced with filler bodies or glass beads melting above the melting temperature of the thermoplastic plastic material and/or is a polyamide plastic material.

14. Method for producing an electric motor (10) for use in a hand-operated power tool (100) or vacuum cleaner, wherein the motor (10) comprises a stator (20), in which a rotor (40; 140; 240) of the motor (10) is accommodated for rotation about an axis of rotation (D), wherein the rotor (40; 140; 240) comprises a magnetic flux conducting body (41; 141; 241), in particular a laminated core (50), having a shaft through-opening (42), wherein a rotor shaft (11) passes through the shaft through-opening (42) and projects with its longitudinal ends in front of the flux conducting body (41; 141; 241), and wherein the rotor shaft (11) is non-rotatably connected to the flux conducting body (41; 141; 241) by way of a connecting body (70; 170; 270) made of plastic, wherein the method comprises the potting of the flux conducting body (41; 141; 241) with the rotor shaft (11) with a thermoplastic plastic material to produce the connecting body (70; 170; 270), wherein the connecting body (70; 170; 270) comprises at least one connecting section (79; 287), which connects the rotor shaft (11) to the flux conducting body (41; 141; 241) and has at least one engagement-from-behind section (80; 180; 280) in engagement from behind radially to the axis of rotation (D) with the flux conducting body (41; 141; 241) or the rotor shaft (11), wherein in the flux conducting body (41; 141; 241) and/or the rotor shaft (11) there is provided at least one passage (254) for the thermoplastic plastic material, which passage (254) has at least one passage section (257) located at a radial distance from the shaft through-opening (42) and extending in the direction of the axis of rotation (D) with a directional component to form the at least one engagement-from-behind receptacle or the at least one engagement-from-behind projection.

## Revendications

1. Machine-outil manuelle (100) ou aspirateur avec un moteur (10) électrique, dans lequel le moteur (10) présente un stator (20), dans lequel un rotor (40 ; 140 ; 240) du moteur (10) est logé de manière à pouvoir tourner autour d'un axe de rotation (D), dans lequel le rotor (40 ; 140 ; 240) présente un corps d'acheminement de flux (41, 141 ; 241) magnétique, en particulier un paquet de tôles (50), qui présente une ouverture de passage d'arbre (42), dans lequel un arbre de rotor (11) traverse l'ouverture de passage d'arbre (42) et fait saillie par ses extrémités longitudinales du corps d'acheminement de flux (41, 141 ; 241), et dans lequel l'arbre de rotor (11) est relié de manière solidaire en rotation au corps d'acheminement de flux (41, 141 ; 241) à l'aide d'un corps de liaison (70 ; 170 ; 270) composé de matière synthétique, dans lequel le corps de liaison (70 ; 170 ; 270) est fabriqué avec une matière synthétique thermoplastique par coulée du corps d'acheminement de flux (41, 141 ; 241) avec l'arbre de rotor (11), dans lequel le corps de liaison (70 ; 170 ; 270) présente au moins une section de liaison (79 ; 287), qui relie l'arbre de rotor (11) et le corps d'acheminement de flux (41, 141 ; 241) et présente au moins une section de prise par l'arrière (80 ; 180 ; 280), qui est en prise par l'arrière de manière radiale par rapport à l'axe de rotation (D) avec le corps d'acheminement de flux (41, 141 ; 241) ou l'arbre de rotor (11), **caractérisé en ce qu'**est disposé, dans le corps d'acheminement de flux (41, 141 ; 241) et/ou l'arbre de rotor (11), au moins un canal (254) pour la matière synthétique thermoplastique, qui présente, pour former l'au moins un logement de prise par l'arrière ou l'au moins une partie faisant saillie de prise par l'arrière, au moins une section de canal (257) espacée de manière radiale par rapport à l'ouverture de passage d'arbre (42) et s'étendant avec une composante de direction en direction de l'axe de rotation (D).

2. Machine-outil manuelle (100) ou aspirateur selon la revendication 1, **caractérisé en ce que** l'au moins un canal (254) pour la matière synthétique thermoplastique s'étend au niveau du corps d'acheminement de flux (41, 141 ; 241) entre l'ouverture de passage d'arbre (42) et sa périphérie extérieure, et/ou le corps de liaison (70 ; 170 ; 270) présente une zone centrale (77 ; 177 ; 277) enveloppant de manière à présenter une forme annulaire l'arbre de rotor (11).

3. Machine-outil manuelle (100) ou aspirateur selon la revendication 1 ou 2, **caractérisé en ce que** le corps de liaison (70 ; 170 ; 270), en particulier l'au moins une section de prise par l'arrière (80 ; 180 ; 280), comprend une section enveloppante (75; 175; 275) ou une enveloppe extérieure (71 ; 171 ; 271) entourant le corps d'acheminement de flux (41, 141 ; 241) au niveau de sa périphérie extérieure radiale.

4. Machine-outil manuelle (100) ou aspirateur selon la revendication 3, **caractérisé en ce que** la section enveloppante (75 ; 175 ; 275) est reliée à une partie centrale (77 ; 177 ; 277), entourant l'arbre de rotor (11), du corps de liaison (70 ; 170 ; 270) à l'aide d'au moins un bras de liaison (285), traversant le corps d'acheminement de flux (41, 141 ; 241), du corps de liaison (70 ; 170 ; 270), et/ou à l'aide d'une section de paroi (74) ou d'une section de bras, disposée au niveau d'un côté frontal du corps d'acheminement de flux (41, 141 ; 241), du corps de liaison (70; 170; 270), et/ou que des sections (43; 143; 243), s'étendant en particulier de manière parallèle par rapport à l'axe de rotation (D), du corps d'acheminement de flux (41, 141 ; 241) font saillie vers l'extérieur radialement du corps de liaison (70 ; 170 ; 270).

5. Machine-outil manuelle (100) ou aspirateur selon la revendication 3 ou 4, **caractérisé en ce que** le corps de liaison (70 ; 170 ; 270) présente au niveau de sa périphérie extérieure entre deux sections (43 ; 143 ; 243), faisant saillie radialement vers l'extérieur du corps de liaison (70; 170; 270), du corps d'acheminement de flux (41, 141 ; 241), au moins une partie faisant saillie intermédiaire (182), dans lequel l'au moins une partie faisant saillie intermédiaire (182) fait saillie à peu près aussi loin de la périphérie extérieure du corps de liaison (70 ; 170 ; 270) que les sections (43 ; 143 ; 243) adjacentes du corps d'acheminement de flux (41, 141 ; 241), et/ou que l'enveloppe extérieure (71 ; 171 ; 271) du corps de liaison (70 ; 170 ; 270) présente des renfoncements (183), dans lesquels les sections (43 ; 143 ; 243), faisant saillie radialement du corps de liaison (70 ; 170 ; 270), du corps d'acheminement de flux (41, 141 ; 241) sont disposées.

6. Machine-outil manuelle (100) ou aspirateur selon l'une quelconque des revendications précédentes, **caractérisé en ce qu'**est prévue, au niveau du corps d'acheminement de flux (41, 141 ; 241) et/ou de l'arbre de rotor (11), pour former au moins un logement de prise par l'arrière pour l'au moins une section de prise par l'arrière (80 ; 180 ; 280), une structure de canal (253) configurée à la manière d'un labyrinthe et remplie de la matière synthétique thermoplastique.

7. Machine-outil manuelle (100) ou aspirateur selon l'une quelconque des revendications précédentes, **caractérisé en ce qu'**au moins un logement de prise par l'arrière ou au moins une partie faisant saillie de prise par l'arrière pour l'au moins une section de prise par l'arrière (80 ; 180 ; 280) est disposé ou disposée au niveau d'une périphérie intérieure de l'ouverture de passage d'arbre (42), et/ou au moins un logement de prise par l'arrière ou une partie faisant saillie de prise par l'arrière pour l'au moins une section de prise par l'arrière (80 ; 180 ; 280) s'étend sensiblement sur toute la longueur du corps d'acheminement de flux (41, 141 ; 241) ou de l'arbre de rotor (11) par rapport à l'axe de rotation (D) et/ou est configuré ou configurée à la manière d'une rainure longitudinale ou d'une nervure longitudinale.

8. Machine-outil manuelle (100) ou aspirateur selon l'une quelconque des revendications précédentes, **caractérisé en ce que** l'arbre de rotor (11) et/ou le corps d'acheminement de flux (41, 141 ; 241) présente une structure rainurée (26) présentant en particulier des sillons avec au moins une rainure, avec laquelle le corps de liaison (70 ; 170 ; 270) vient en prise, et/ou présente une structure nervurée avec au moins une nervure, qui vient en prise avec le corps de liaison (70 ; 170 ; 270) et/ou la section de prise par l'arrière (80 ; 180 ; 280) du corps de liaison (70 ; 170 ; 270) est en forme de crochet et/ou comprend une structure à crochets et/ou le corps de liaison (70 ; 170 ; 270) est relié à l'arbre de rotor (11) et/ou au corps d'acheminement de flux (41, 141 ; 241) à l'aide d'une structure de prise par l'arrière de type tenon ou de type sapin.

9. Machine-outil manuelle (100) ou aspirateur selon la revendication 8, **caractérisé en ce que** la structure à crochets du corps de liaison (70 ; 170 ; 270) s'étend vers l'extérieur radialement depuis une zone centrale (77 ; 177 ; 277), entourant l'arbre de rotor (11), du corps de liaison (70 ; 170 ; 270) et vient en prise avec un logement pour crochet, en particulier une contre-dépouille, au niveau de la périphérie intérieure de l'ouverture de passage d'arbre (42) du corps d'acheminement de flux (41, 141 ; 241).

10. Machine-outil manuelle (100) ou aspirateur selon l'une quelconque des revendications précédentes, **caractérisé en ce que** le corps d'acheminement de flux (41, 141 ; 241) est formé par un paquet de tôles (50) avec plusieurs tôles (51 ; 151 ; 251), et les tôles (51 ; 151 ; 251) sont configurées au moins en partie sous la forme de parties identiques.

11. Machine-outil manuelle (100) ou aspirateur selon la revendication 10, **caractérisé en ce que** les tôles (51 ; 151 ; 251) présentent au moins un logement de prise par l'arrière et/ou au moins une partie faisant saillie vers l'arrière et/ou au moins une section de canal (256 ; 258), dans lequel les tôles (51 ; 151 ; 251) sont disposées les unes à côté des autres par rapport à l'axe de rotation (D) et présentent individuellement ou par groupes un décalage d'angle de rotation par rapport à l'axe de rotation (D) de sorte que les logements de prise par l'arrière ou les parties faisant saillie de prise par l'arrière ou les sections de canal (256 ; 258) délimités par les tôles (51 ; 151 ; 251) respectives aient des positions d'angle de rotation différentes les unes des autres par rapport à l'axe de rotation (D).

12. Machine-outil manuelle (100) ou aspirateur selon la revendication 10 ou 11, **caractérisé en ce que** des logements de prise par l'arrière ou des parties faisant saillie de prise par l'arrière ou des sections de canal (256 ; 258) délimités par des tôles de partie identique ou des groupes de tôles de partie identique disposés les uns à côté des autres et présentant des positions d'angle de rotation distinctes communiquent les uns avec les autres et sont traversés par au moins une section de liaison (79 ; 287) du corps de liaison (70 ; 170 ; 270).

13. Machine-outil manuelle (100) ou aspirateur selon l'une quelconque des revendications précédentes, **caractérisé en ce que** l'au moins une section de liaison (79 ; 287) surmonte un espace intermédiaire, qui se forme par une diminution de la matière synthétique thermoplastique lors de son durcissement entre le corps d'acheminement de flux (41, 141 ; 241), en particulier une périphérie intérieure de l'ouverture de passage d'arbre (42) du corps d'acheminement de flux (41, 141 ; 241), et l'arbre de rotor (11), en particulier une périphérie extérieure de l'arbre de rotor (11), et/ou la matière synthétique thermoplastique est renforcée par des fibres et/ou est renforcée avec des corps de remplissage et/ou des billes de verre pouvant fondre à une température supérieure à la température de fusion de la matière synthétique thermoplastique et/ou une matière synthétique de polyamide.

14. Procédé servant à fabriquer un moteur (10) électrique pour l'utilisation dans une machine-outil manuelle (100) ou un aspirateur, dans lequel le moteur (10) présente un stator (20), dans lequel un rotor (40 ; 140 ; 240) du moteur (10) est logé de manière à pouvoir tourner autour d'un axe de rotation (D), dans lequel le rotor (40 ; 140 ; 240) présente un corps d'acheminement de flux (41, 141 ; 241) magnétique, en particulier un paquet de tôles (50), qui présente une ouverture de passage d'arbre (42), dans lequel un arbre de rotor (11) traverse l'ouverture de passage d'arbre (42) et fait saillie par ses extrémités longitudinales du corps d'acheminement de flux (41, 141 ; 241), et dans lequel l'arbre de rotor (11) est relié de manière solidaire en rotation au corps d'acheminement de flux (41, 141 ; 241) à l'aide d'un corps de liaison (70; 170; 270) composé de matière synthétique, dans lequel le procédé comprend une coulée du corps d'acheminement de flux (41, 141 ; 241) avec l'arbre de rotor (11) avec une matière synthétique thermoplastique afin de fabriquer le corps de liaison (70 ; 170 ; 270), dans lequel le corps de liaison (70 ; 170 ; 270) présente au moins une section de liaison (79; 287), qui relie l'arbre de rotor (11) et le corps d'acheminement de flux (41, 141 ; 241) et présente au moins une section de prise par l'arrière (80 ; 180 ; 280), qui est en prise par l'arrière de manière radiale par rapport à l'axe de rotation (D) avec le corps d'acheminement de flux (41, 141 ; 241) et/ou l'arbre de rotor (11), dans lequel est disposé, dans le corps d'acheminement de flux (41, 141 ; 241) et/ou l'arbre de rotor (11), au moins un canal (254) pour la matière synthétique thermoplastique, qui présente, pour former l'au moins un logement de prise par l'arrière ou l'au moins une partie faisant saillie de prise par l'arrière, au moins une section de canal (257) espacée de manière radiale par rapport à l'ouverture de passage d'arbre (42) et s'étendant avec une composante de direction en direction de l'axe de rotation (D).
